# EUROPEAN PATENT SPECIFICATION

(11) **EP 0 452 087 B1**
(45) Date of publication and mention of the grant of the patent: **14.02.1996**
(21) Application number: 91303109.2
(22) Date of filing: 09.04.1991
(51) Int. Cl.: H01B 13/00

(54) **Mineral insulated cable manufacture**
Herstellung von mineralisolierten Kabeln
Fabrication de câbles à isolant minéral

(30) Priority: 11.04.1990 GB 9008258
(43) Date of publication of application: 16.10.1991
(73) Proprietor: BICC Public Limited Company, London W1X 5FH (GB)
(72) Inventor: Simester, Ronald Alexander, Portswood, Southampton Hampshire SO2 1BP (GB)
(74) Representative: Dlugosz, Anthony Charles

(56) References cited:
- EP-A- 0 059 971
- EP-A- 0 384 778
- DE-A- 1 934 107
- DE-A- 2 418 130

## Description

This invention relates to a method of, and apparatus for, manufacturing mineral insulated electric cables, that is to say cables of the kind comprising at least one elongate conductor insulated from a surrounding sheath of metal or metal alloy, and where there is more than one elongate conductor from the other conductor or conductors, by compacted mineral insulating powder, usually but not necessarily magnesium oxide.

In one method of manufacturing mineral insulated electric cable currently employed and described for example in DE-A-2,418,130, GB-A-2,041,260 and GB-A-2,106,307, mineral insulating powder and a conductor rod or conductor rods are simultaneously introduced into a powder delivery tube, a copper tube is continuously formed from an advancing strip of copper or copper alloy which is transversely folded into tubular form around the powder delivery tube and whose edges are continuously welded together, mineral insulating powder and the conductor rod or rods emerging from the powder delivery tube downstream of the station at which said welding is effected pass into the copper tube so formed, the powder is densely packed in the tube and around the conductor rod or rods, and the filled tube is then caused to travel through a die or dies or other means to reduce it to the required cross-sectional size. For convenience, this known method of manufacturing mineral insulated electric cable will hereinafter be referred to as "the method of manufacturing mineral insulated electric cable as hereinbefore defined".

As described in GB-A-2,041,260 and GB-A-2,106,307, the welding step may be conducted with an atmosphere of argon or other inert gas on the radially inward side of the copper tube so formed.

It is an object of the present invention to provide, in the method of manufacturing mineral insulated electric cable as hereinbefore defined, an improved method of continuously welding together the edges of the advancing strip of copper or copper alloy which has been transversely folded into a tubular form.

In the improved method according to the invention, there is disposed on the outer surface of the powder delivery tube and radially inwardly of the advancing copper strip in the vicinity of the station at which the edges of the transversely folded strip are welded together, a preformed body of a fluid-permeable ceramic or sintered material capable of withstanding the temperature to which it will be subjected during the welding operation, and the argon or other inert gas fed into the fluid-permeable ceramic or sintered material of the preformed body from at least one pipe is caused to flow radially outwardly through the preformed body to provide the environment of argon or other inert gas between the preformed body and the copper tube in the vicinity of the welding station.

Fluid permeable bodies have been employed for the introduction of argon into the weld area during butt welding of metal pipes, for example as described in DE-A-1934107.

Preferably, with a view to ensuring that argon or other inert gas flows through and is evenly distributed over substantially the whole of the radially outer surface of the preformed body, the peripheral side surfaces of the preformed body are sealed to render them substantially fluid-impermeable. Preferably, also, with a view to ensuring that argon or other inert gas flowing through the radially outer surface of the preformed body is at a substantially constant pressure throughout substantially the whole area of said surface, a substantially centrally disposed major portion of the radially inner surface of the preformed body is bounded by a peripherally continuous part of said radially inner surface and is radially spaced from the powder delivery tube to form a closed chamber into which argon or other inert gas from said pipe or pipes is fed and from which argon or other inert gas flows radially outwardly through the fluid-permeable material of the preformed body.

With a view to encouraging argon or other inert gas to flow radially outwardly of the preformed body in a direction towards the continuous weld being effected, preferably the preformed body has in its radially outer surface a groove which extends lengthwise with respect to the powder delivery tube and which is disposed radially inwardly of the continuous weld. Since the radial thickness of the preformed body is at a minimum in the vicinity of this groove, argon or other inert gas will tend to flow towards and radially outwardly of the groove and hence towards the immediate vicinity of the continuous weld. The groove preferably is closed at its upstream end so that argon or other inert gas will also tend to flow along the groove and between the preformed body and the copper tube in the same direction of travel as the copper tube.

The preformed body may have a radially outer surface which forms part of the outer surface of an imaginary cylinder of a similar shape to but smaller than that of the copper tube being formed; usually the copper tube will be of substantially circular cross-section.

The or each pipe by means of which argon or other inert gas is fed into the preformed body of fluid-permeable ceramic or sintered material may be disposed lengthwise in the powder delivery tube and may protrude through the wall of the powder delivery tube into the pressure-equalising chamber formed between the preformed body and the powder delivery tube but, preferably, the preformed body is of elongate shape shape and argon or other gas is fed into the pressure-equalising chamber formed between the preformed body and the powder delivery tube through each of two pipes which are disposed lengthwise between the powder delivery tube and the advancing copper tube and which pass through opposite ends of the preformed body and open into the pressure-equalising chamber.

On leaving the vicinity of the welding station, argon or other inert gas preferably is caused to flow back between the powder delivery tube and the copper tube at a position circumferentially remote from the welding station.

Preferably, the preformed body is bonded to the outer surface of the powder delivery tube by a heat-resistant adhesive.

The preformed body may be manufactured of any ceramic or sintered material which is capable of withstanding the temperatures to which the body will be subjected during the welding operation, which can be machined or otherwise worked to form a body of the required shape and size to the required tolerances and which can be rendered fluid-permeable; preferred materials include reaction bonded silicon nitride and stainless steel.

The invention also includes apparatus for manufacturing mineral insulated electric cable by the improved method hereinbefore described.

The invention further includes a mineral insulated electric cable manufactured by the improved method hereinbefore described.

The improved method and apparatus of the present invention are especially, but not exclusively, applicable to the method of and apparatus for manufacturing mineral insulated electric cable as described and claimed in the specification of our co-pending Patent Application No: 9004185.6 (Serial No: 2230894).

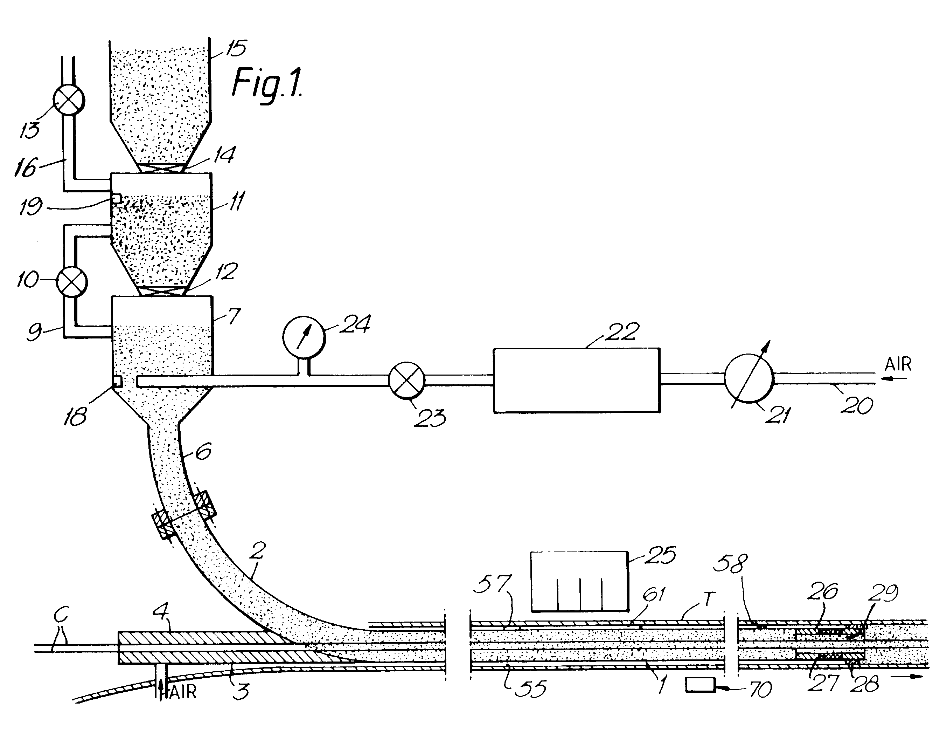

The invention is further illustrated by a description, by way of example, of the preferred method of continuously manufacturing mineral insulated electric cable in which a copper sheath tube is continuously formed by transversely folding an advancing strip of copper or copper alloy into tubular form and welding the edges of the advancing strip together, with reference to the accompanying drawings, in which:-
Figure 1 is a diagrammatic side view of the preferred apparatus for use in the preferred method;

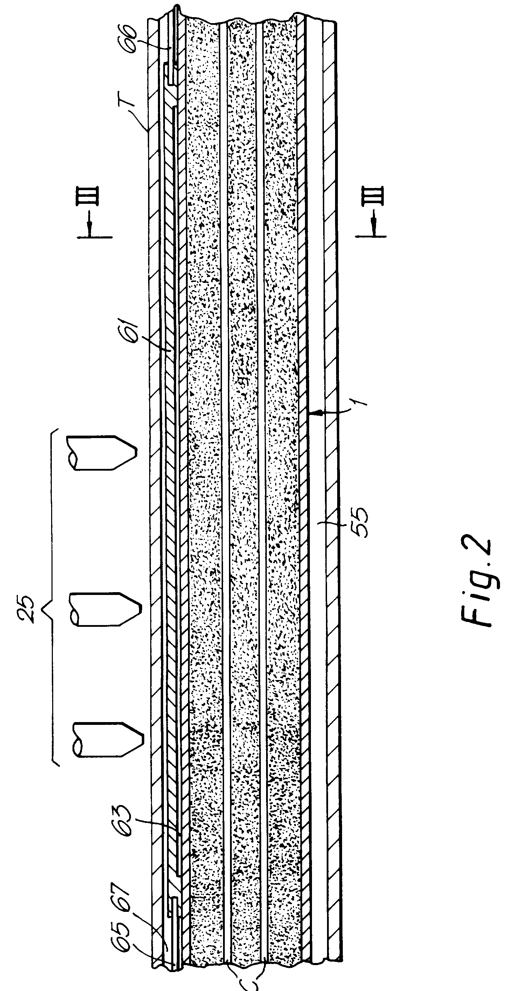

Figure 2 is a diagrammatic sectional side view of a part of the powder delivery tube of the preferred apparatus in the vicinity of the welding station, drawn on an enlarged scale, and

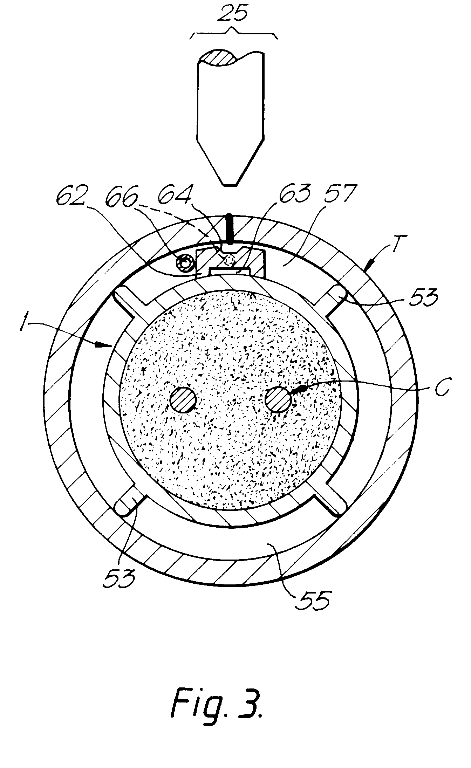

Figure 3 is a transverse cross-sectional view of the powder delivery tube taken on the line III-III- in Figure 2.

Referring to the drawings, the preferred apparatus for use in the preferred method of manufacturing mineral insulated electric cable comprises a powder delivery tube 1 which over a major part of its length is disposed substantially horizontally and which, over a minor part 2 of its length at its upstream end, is smoothly curved in an upward direction. The minor end part 2 of the delivery tube 1 constitutes one branch of a bifurcated tubular fitting 3, the second branch 4 of which is in axial alignment with the major part of the length of the delivery tube 1. Positioned above and upstream of the minor end part 2 of the delivery tube 1 is a fluid-tight main chamber 7 for mineral insulating powder, which chamber is detachably connected to the minor end part of the delivery tube by a smoothly curved pipe 6. A fluid-tight supplementary powder chamber 11 for automatically re-charging the main chamber 7 is disposed above and connected via an automatically-operable valve 12 to the main chamber. The main powder chamber 7 and supplementary powder chamber 11 are also interconnected by a pipe 9 in which is fitted an automatically-operable valve 10. The supplementary powder chamber 11 has at its upper end an outlet pipe 16 open to the atmosphere in which is an automatically operable valve 13. A hopper 15 mounted above the supplementary powder chamber 11 and fed with mineral insulating powder from a bulk source (not shown) is connected to the supplementary powder chamber via an automatically-operable valve 14. The main powder chamber 7 incorporates a level sensor 18 for detecting a predetermined minimum level of powder in the chamber and the supplementary powder chamber 11 has a level detector 19 for detecting a predetermined maximum level of powder in the supplementary chamber. Clean dry air from a source (not shown) is continuously injected into the main powder chamber 7 through a pipe 20 via a pressure controller 21, an accumulator 22 and a valve 23, the pressure of the clean dry air being recorded by a gauge 24. Within the main powder chamber 7, the pipe 20 extends around the chamber and has in its wall a multiplicity of mutually spaced apertures through which dry clean air under the required predetermined pressure is expelled in a plurality of directions into the chamber. A rotatably driven screw (not shown) may be so disposed in the main powder chamber 7 that, when the screw is rotatably driven about its axis, mineral insulating powder is encouraged to flow towards the outlet of the chamber and down the pipe 6.

Intermediate of the ends of the powder delivery tube 1 is a welding station 25 at which the edges of an advancing strip T of copper or copper alloy, which is travelling in the direction of its length and is being transversely folded into tubular form around the powder delivery tube so that it surrounds and is radially spaced from the delivery tube, are continuously welded together to form a copper sheath tube into which mineral insulating powder is to be fed and partially compacted around advancing conductor rods C at a required fill density.

Detachably connected to the downstream end of the powder delivery tube 1 is a separately formed fitting 26 which incorporates or constitutes filtered outlet ports 27 through which air is expelled from the delivery tube, at least one spacer member for locating the conductor rod C positively with respect to the advancing copper tube T, a passage or passages 29 for flow of powder from the delivery tube into the copper tube and filtering means 28 disposed between the fitting and the copper tube downstream of the filtered outlet ports.

The powder delivery tube 1 has, extending from immediately upstream of the fitting 26 to a position downstream of the bifurcated fitting 3, four circumferentially spaced radially outwardly extending longitudinally continuous ribs 53 which bear against and space the advancing copper tube T from the delivery tube and which define four independent longitudinally extending passages. The downstream ends of two of the passages are closed by deflectors 58 and, upstream of the deflectors, are interconnected. The upstream ends of the other two passages may be open to the atmosphere via a filter bag (not shown) or may be connected to a re-claim or re-cycling plant.

Downstream of the separately formed fitting 26 and upstream of rolls or a die or dies (not shown) for reducing the cross-sectional size of the powder filled copper tube T, the apparatus may include at least one device (not shown) for vibrating the powder filled tube to assist in partial compaction of the powder in the tube and around the conductor rods.

In the vicinity of the welding station 25 at which the edges of the transversely folded copper strip T are welded together, a preformed elongate body of fluid-permeable reaction bonded silicon nitride is bonded to the outer surface of the powder delivery tube 1 by a heat-resistant adhesive. The peripheral side surfaces of the preformed body 61 are sealed to render them fluid-impermeable and a centrally disposed major portion of the radially inner surface of the preformed body is bounded by a peripherally continuous part 62 of said radially inner surface and is radially spaced from the powder delivery tube 1 to form a closed chamber 63. In its radially outer surface, the preformed body 61 has a groove 64 which extends lengthwise with respect to the powder delivery tube 1 and which is disposed radially inwardly of the continuous weld of the transversely folded copper strip T, the groove being closed at its upstream end. At the upstream end of the preformed body 61, a pipe 65 is disposed lengthwise in the passage 57 between the powder delivery tube 1 and the advancing copper strip T and opens into the chamber 63; a pipe 66 extends alongside the preformed body 61 between the powder delivery tube and the advancing copper strip T in passage 57 and is folded back upon itself so that it opens into the chamber 63 at the downstream end of the preformed body.

When using the apparatus illustrated in the drawings in the manufacture of mineral insulated electric cable in which a copper sheath tube T is continuously formed by transversely folding an advancing copper strip in tubular form and welding the edges of the advancing strip together, conductor rods C are continuously fed through the second branch 4 of the bifurcated fitting 3 into the powder delivery tube 1 and the copper tube T is continuously formed by transversely folding the advancing copper strip around the powder delivery tube and continuously welding its edges together as they travel pass the welding station 25. With valve 23 open and valves 10, 12, 13 and 14 closed, clean dry air at a predetermined pressure is injected via the pipe 20 and accumulator 22 into the main powder chamber 7 and mineral insulating powder under the pressure of the clean dry air is continuously fed via the pipe 6 and the minor end part 2 of the powder delivery tube 1 into the powder delivery tube. Clean dry air also at a predetermined pressure is injected into the bifurcated fitting 3 through an inlet port 39 to prevent build up of mineral insulating powder at the intersection of the branches of the fitting.

When the level of mineral insulating powder in the main powder chamber 7 falls to a predetermined level, this low level of powder is detected by the level sensor 18 which automatically initiates a command sequence. Valve 10 opens to balance the pressures in the main chamber 7 and supplementary chamber 11 and, after a short time delay, valve 12 opens to allow a charge of powder to fall from the supplementary chamber into the main chamber. After a suitable time delay, valve 12 closes, valve 10 closes and then valve 13 opens to relieve the pressure in the supplementary chamber 11. After a further short time delay, valve 14 opens to allow powder from the hopper 15 to flow into the supplementary chamber 11. When the level of powder in the supplementary chamber 11 has risen to a predetermined level, this high level is detected by the level sensor 19 which automatically causes valves 13 and 14 to close. Normal operation of the apparatus then continues until the level of powder in the main chamber 7 again falls to said predetermined low level when the aforesaid cycle is repeated.

Mineral insulating powder under the pressure of the dry clean air is injected from the powder delivery tube 1 through the bore of the fitting 26 into the advancing copper tube T so that mineral insulating powder fills the space around the conductor rods C and is partially compacted under the pressure of the dry clean air. Dry clean air is expelled through the filter outlet ports 27, flows back between the powder delivery tube 1 and the advancing copper tube T and is deflected by the deflectors 58 to flow along two of the passages, and conveys heat emitted by the advancing copper tube. Filtering means 28 prevents mineral insulating powder from the copper tube T from flowing back between the copper tube and the fitting. From the aforesaid two passages, the dry clean air may be expelled to the atmosphere via a filter bag (not shown) to catch any stray powder expelled with the air where it may be fed to a re-claim or re-cycling plant. During passage of the copper tube through the welding station 25, argon is fed through the pipes 65 and 66 into the chamber 63 from where it flows radially outwardly through the preformed body 61 to provide an environment of argon between the preformed body and the copper tube T in the vicinity of the welding station. Since the chamber 63 underlies a centrally disposed major portion of the radially inner surface of the preformed body 61, argon flowing through the radially outer surface of the preformed body is at a substantially constant pressure throughout substantially the whole of the surface. The groove 64 in the radially outer surface of the preformed body 61 encourages argon flowing radially outwardly of the preformed body in a direction towards the continuous weld being effected in the copper tube T.

On leaving the vicinity of the welding station 25, argon flows back between the powder delivery tube 1 and the copper tube T along the passage 55 of the other two passages, which passage is at a position circumferentially remote from the welding station.

Downstream of the welding station 25, the copper tube T may pass through a weld monitoring station 70 at which any defects in the continuously formed weld of the copper tube T are continuously identified and located by the method and apparatus as described in the specification of our co-pending British Patent Application No: 9007644.9 (Serial No: 2232250).

Downstream of the fitting 26, the filled tube passes through a die or dies and/or rollers to reduce the filled tube the required cross-sectional size.

The improved method of continuously welding together the edges of the advancing, transversely folded copper strip of the present invention provides several important advantages:
(i) it ensures that between the powder delivery tube and the copper tube in the vicinity of the welding station there is an environment of argon or other inert gas which substantially reduces risk of oxidisation of the copper tube;
(ii) it provides for a substantially even dissipation of argon or other inert gas between the powder delivery tube and the copper tube in the vicinity of the welding station thereby substantially reducing risk of turbulence of the argon or other inert gas which might otherwise induce oxygen inclusion;
(iii) it constitutes a pressure pad which supports and assists in stabilisation of the weld pool, thereby enhancing the standard of the continuous weld. When the improved method of the present is used in the method of our aforesaid co-pending patent application, two additional advantages are provided:-
(iv) the pressure pad serves to limit the cross-sectional size of the weld bead on the inner surface of the copper tube, thereby assisting in effecting of a satisfactory powder filtering means at the downstream end of the powder delivery tube, and
(v) the environment of argon or other inert gas between the powder delivery tube and the copper tube in the vicinity of the welding station serves to reduce substantially risk that powder fines and oxygen contained in the air expelled from the downstream end of the powder delivery tube will gain access to the vicinity of the welding station.

## Claims

1. A method of manufacturing mineral insulated electric cable in which mineral insulating powder and a conductor rod or conductors rods (C) are simultaneously introduced into a powder delivery tube (1), a copper tube is continuously formed from an advancing strip (T) of copper or copper alloy which is transversely folded into tubular form around the powder delivery tube and whose edges are continuously welded together in an environment of argon or other inert gas on the radially inward side of the copper tube so formed, mineral insulating powder and the conductor rod or rods emerging from the powder delivery tube downstream of the station (25) at which said welding is effected pass into the copper tube so formed, the powder is densely packed in the tube and around the conductor rod or rods, and the filled tube is then caused to travel through a die or dies or other means to reduce it to the required cross-sectional size characterised in that there is disposed on the outer surface of the powder delivery tube (1) and radially inwardly of the advancing copper strip (T) in the vicinity of the station (25) at which the edges of the transversely folded strip are welded together, a preformed body (61) of a fluid-permeable ceramic or sintered material capable of withstanding the temperature to which it will be subjected during the welding operation, and wherein the argon or other inert gas fed into the fluid-permeable ceramic or sintered material of the preformed body (61) from at least one pipe (65,66) is caused to flow radially outwardly through the preformed body to provide the environment of argon or other inert gas between the preformed body and the copper tube in the vicinity of the welding station.

2. A method as claimed in Claim 1, wherein on leaving the vicinity of the welding station (25), argon or other inert gas is caused to flow back between the powder delivery tube (1) and the copper tube at a position circumferentially remote from the welding station.

3. Apparatus for use in a method of manufacturing mineral insulated electric cable in which mineral insulating powder and a conductor rod or conductor rods (C) are simultaneously introduced into a powder delivery tube (1), a copper tube is continuously formed from an advancing strip (T) of copper or copper alloy which is transversely folded into tubular form around the powder delivery tube and whose edges are continuously welded together, in an environment of argon or other inert gas on the radially inward side of the copper tube so formed, mineral insulating powder and the conductor rod or rods emerging from the powder delivery tube downstream of the station (25) at which said welding is effected pass into the copper tube so formed, the powder is densely packed in the tube and around the conductor rod or rods, and the filled tube is then caused to travel through a die or dies or other means to reduce it to the required cross-sectional size, characterised in that the powder delivery tube (1) has disposed on a part of the outer surface of the tube which is in the vicinity of the welding station (25) and which will be radially inwardly of the continuously welded edges of an advancing transversely folded copper strip, a preformed body (61) of a fluid-permeable ceramic or sintered material capable of withstanding the temperature to which it will be subjected during the welding operation and at least one pipe (65,66) connected to the preformed body through which the argon or other inert gas can be fed into the fluid-permeable ceramic or sintered material of the preformed body and caused to flow radially outwardly of the preformed body to provide the environment of argon or other inert gas between the preformed body and continuously welded edges of a transversely folded copper strip in the vicinity of the welding station.

4. Apparatus as claimed in Claim 3, wherein the peripheral side surfaces of the preformed body (61) of fluid-permeable ceramic or sintered material are sealed to render them substantially fluid-impermeable.

5. Apparatus as claimed in Claim 3 or 4, wherein a substantially centrally disposed major portion of the radially inner surface of the preformed body is bounded by a peripherally continuous part (62) of said radially inner surface and is radially spaced from the powder delivery tube (1) to form a closed chamber (63) into which argon or other inert gas from said pipe or pipes (65,66) can be fed and from which argon or other inert gas can flow radially outwardly through the fluid-permeable material of the preformed body (61).

6. Apparatus as claimed in any one of Claims 3 to 5, wherein the preformed body (61) is of elongate shape and two pipes (65,66) which are disposed radially outwardly of the powder delivery tube (1) and which will be between the powder delivery tube (1) and an advancing transversely folded copper strip (T) pass through opposite ends of the preformed body (61) and open into the chamber (63) therein.

7. Apparatus as claimed in any one of Claims 3 to 6, wherein the preformed body (61) has in its radially outer surface a groove (64) which extends lengthwise with respect to the powder delivery tube (1) and which will be disposed radially inwardly of the continuously welded edges of an advancing transversely folded copper strip.

8. Apparatus as claimed in Claim 7, wherein the groove (64) in the radially outer surface of the preformed body is closed at its upstream end.

9. Apparatus as claimed in any one of Claims 3 to 8, wherein the preformed body (61) has a radially outer surface which forms part of the outer surface of an imaginary cylinder of substantially circular cross-section.

10. Apparatus as claimed in any one of Claims 3 to 9, wherein the preformed body (61) is made of a reaction bonded silicon nitride.

## Patentansprüche

1. Verfahren zum Herstellen eines mineralisolierten elektrischen Kabels, wobei mineralisolierendes Pulver und eine Leiterstange oder Leiterstangen (C) gleichzeitig in ein Pulverzufuhrrohr (1) eingeführt werden, ein Kupferrohr aus einem sich vorwärts bewegenden Band (T) aus Kupfer oder einer Kupferlegierung, das in Querrichtung um das Pulverzufuhrrohr in eine Rohrform gebogen wird und dessen Ränder in einer Umgebung aus Argon oder einem Inertgas an der radial innen angeordneten Seite des derart geformten Kupferrohrs durchgehend zusammengeschweißt werden, kontinuierlich geformt wird, mineralisolierendes Pulver und die Leiterstange oder Leiterstangen, die aus dem Pulverzufuhrrohr hinter der Station (25) heraustreten, an der der Schweißvorgang ausgeführt wird, in das derart geformte Kupferrohr eingeführt werden, wobei das Pulver im Rohr und um den Leiterstab oder die Leiterstäbe dicht gepackt wird und das gefüllte Rohr daraufhin veranlaßt wird, eine oder mehrere Ziehdüsen oder eine andere Einrichtung zu durchlaufen, um seinen Querschnitt auf eine gewünschte Größe zu vermindern,
**dadurch gekennzeichnet, daß**
an der Außenfläche des Pulverzufuhrrohrs (1) und bezüglich des sich vorwärts bewegenden Kupferbandes (T) radial innen in der Nähe der Station (25), an der die Ränder des in Querrichtung gebogenen Bandes zusammengeschweißt werden, ein vorgeformter Körper (61) aus einem fluiddurchlässigen Keramik- oder Sintermaterial angeordnet ist, der der Temperatur widerstehen kann, der er während des Schweißvorgangs ausgesetzt ist, und wobei das von mindestens einem Rohr (65, 66) in das fluiddurchlässige Keramik- oder Sintermaterial des vorgeformten Körpers (61) eingeleitete Argon- oder andere Inertgas dazu veranlaßt wird, durch den vorgeformten Körper radial nach außen zu strömen, um zwischen dem vorgeformten Körper und dem Kupferrohr in der Nähe der Schweißstation die Umgebung aus Argon- oder einem anderen Inertgas bereitzustellen.

2. Verfahren nach Anspruch 1, wobei das Argon- oder andere Inertgas, wenn dieses aus der Umgebung der Schweißstation (25) heraustritt, veranlaßt wird, zwischen dem Pulverzufuhrrohr (1) und dem Kupferrohr an einer von der Schweißstation entfernten Umfangsposition zurückzuströmen.

3. Vorrichtung zur Verwendung in einem Verfahren zum Herstellen eines mineralisolierten elektrischen Kabels, wobei mineralisolierendes Pulver und eine Leiterstange oder Leiterstangen (C) gleichzeitig in ein Pulverzufuhrrohr (1) eingeführt werden, ein Kupferrohr aus einem sich vorwärts bewegenden Band (T) aus Kupfer oder einer Kupferlegierung, das in Querrichtung um das Pulverzufuhrrohr in eine Rohrform gebogen wird und dessen Ränder in einer Umgebung aus Argon oder einem Inertgas an der radial innen angeordneten Seite des derart geformten Kupferrohrs durchgehend zusammengeschweißt werden, kontinuierlich geformt wird, mineralisolierendes Pulver und die Leiterstange oder Leiterstangen, die aus dem Pulverzufuhrrohr hinter der Station (25) heraustreten, an der der Schweißvorgang ausgeführt wird, in das derart geformte Kupferrohr eingeführt werden, wobei das Pulver im Rohr und um den Leiterstab oder die Leiterstäbe dicht gepackt wird und das gefüllte Rohr daraufhin veranlaßt wird, eine oder mehrere Ziehdüsen oder eine andere Einrichtung zu durchlaufen, um seinen Querschnitt auf eine gewünschte Größe zu vermindern,
**dadurch gekennzeichnet, daß**
an einem Teil der Außenfläche des Pulverzufuhrrohrs (1), der in der Nähe der Schweißstation (25) und bezüglich der verschweißten Ränder des vorwärts bewegten, in Querrichtung gebogenen Kupferbandes radial innen angeordnet ist, ein vorgeformter Körper (61) aus einem fluiddurchlässigen Keramik- oder Sintermaterial, der der Temperatur widerstehen kann, der er während des Schweißvorgangs ausgesetzt ist, und mindestens ein mit dem vorgeformten Körper verbundenes Rohr (65, 66) angeordnet ist, durch das Argon- oder ein anderes Inertgas in das fluiddurchlässige Keramik- oder Sintermaterial des vorgeformten Körpers (61) eingeleitet werden kann und dazu veranlaßt wird, durch den vorgeformten Körper radial nach außen zu strömen, um zwischen dem vorgeformten Körper und den durchlaufend verschweißten Rändern des in Querrichtung gebogenen Kupferbandes in der Nähe der Schweißstation die Umgebung aus Argon- oder einem anderen Inertgas zu bereitzustellen.

4. Vorrichtung nach Anspruch 3, wobei die Umfangsseitenflächen des vorgeformten Körpers (61) aus fluiddurchlässigem Keramik- oder Sintermaterial abgedichtet sind, um diese im wesentlichen fluidundurchlässig zu machen.

5. Vorrichtung nach Anspruch 3 oder 4, wobei ein im wesentlichen mittig angeordneter Hauptabschnitt der radial innen angeordneten Fläche des vorgeformten Körpers durch einen durchgehenden Umfangsabschnitt (62) der radial innen angeordneten Fläche begrenzt wird und vom Pulverzufuhrrohr (1) radial beabstandet ist, um eine geschlossene Kammer (63) zu bilden, in die Argon- oder ein anderes Inertgas von dem Rohr oder den Rohren (65, 66) eingeleitet werden kann und von der das Argon- oder andere Inertgas durch das fluiddurchlässige Material des vorgeformten Körpers (61) radial nach außen strömen kann.

6. Vorrichtung nach einem der Ansprüche 3 bis 5, wobei der vorgeformte Körper (61) länglich ist und zwei Rohre (65, 66), die radial außerhalb des Pulverzufuhrrohrs (1) und zwischen dem Pulverzufuhrrohr (1) und einem sich vorwärts bewegenden, in Querrichtung gebogenen Kupferband (T) angeordnet sind, sich durch entgegengesetzte Enden des vorgeformten Körpers (61) erstrecken und sich in die Kammer (63) öffnen.

7. Vorrichtung nach einem der Ansprüche 3 bis 6, wobei der vorgeformte Körper (61) in seiner radial außen angeordneten Fläche eine Nut (64) aufweist, die sich bezüglich dem Pulverzufuhrrohr (1) in Längsrichtung erstreckt und bezüglich den durchlaufend verschweißten Rändern des sich vorwärts bewegenden, in Querrichtung gebogenen Kupferbandes radial innen angeordnet ist.

8. Vorrichtung nach Anspruch 7, wobei die Nut (64) in der radial außen angeordneten Fläche des vorgeformten Körpers an ihrem bandzufuhrseitigen Ende geschlossen ist.

9. Vorrichtung nach einem der Ansprüche 3 bis 8, wobei der vorgeformte Körper (61) eine radial außen angeordnete Fläche aufweist, die einen Teil der Außenfläche eines gedachten Zylinders mit im wesentlichen kreisförmigem Querschnitt aufweist.

10. Vorrichtung nach einem der Ansprüche 3 bis 9, wobei der vorgeformte Körper (61) aus einem reaktionsgebundenem Siliziumnitrid hergestellt ist.

## Revendications

1. Procédé de fabrication d'un câble électrique à isolant minéral dans lequel une poudre minérale isolante et une ou plusieurs barres conductrices (C) sont introduites simultanément dans un tube (1) d'amenée de poudre, un tube de cuivre est formé en continu à partir d'une bande (T) de cuivre ou d'alliage de cuivre qui avance et qui est repliée transversalement pour prendre une forme tubulaire autour du tube d'amenée de poudre, ses bords étant soudés en continu l'un à l'autre sous atmosphère d'argon ou d'un autre gaz inerte, sur le côté radialement intérieur du tube de cuivre ainsi formé, la poudre minérale isolante et la ou les barre(s) conductrice(s) qui sortent du tube d'amenée de poudre en aval de l'endroit (25) où ladite soudure est effectuée passent dans le tube de cuivre ainsi formé, la poudre est tassée dans le tube et autour de la ou des barre(s) conductrice(s) de manière dense et le tube rempli est ensuite déplacé à travers une ou des matrice(s) ou d'autres moyens destinés à réduire sa taille à la section transversale requise,
caractérisé en ce qu'est disposé sur la surface extérieure du tube (1) d'amenée de poudre et radialement à l'intérieur du ruban (T) de cuivre qui avance, au voisinage de l'endroit (25) où les bords du ruban replié dans le sens transversal sont soudés ensemble, un corps préformé (61) en matériau fritté ou en céramique perméable aux fluides, capable de supporter la température à laquelle il sera soumis pendant l'opération de soudure, et dans lequel l'argon ou un autre gaz inerte envoyé dans le matériau fritté ou la céramique perméable aux fluides du corps préformé (61) depuis au moins une canalisation (65, 66) est amené à s'écouler radialement vers l'extérieur à travers le corps préformé pour fournir l'atmosphère d'argon ou d'autre gaz inerte entre le corps préformé et le tube de cuivre au voisinage du lieu de soudure.

2. Procédé selon la revendication 1, dans lequel l'argon ou l'autre gaz inerte est obligé, quand il quitte le voisinage du poste de soudure (25), de revenir entre le tube (1) d'amenée de poudre et le tube de cuivre en une position éloignée du lieu de soudure dans le sens de la circonférence.

3. Appareil à utiliser dans un procédé de fabrication d'un câble électrique à isolant minéral dans lequel une poudre minérale isolante et une ou plusieurs barres conductrices (C) sont introduites simultanément dans un tube (1) d'amenée de poudre, un tube de cuivre est formé en continu à partir d'une bande (T) de cuivre ou d'alliage de cuivre qui avance et qui est repliée transversalement pour prendre une forme tubulaire autour du tube d'amenée de poudre, ses bords étant soudés en continu l'un à l'autre sous atmosphère d'argon ou d'un autre gaz inerte, sur le côté radialement intérieur du tube de cuivre ainsi formé, la poudre minérale isolante et la ou les barre(s) conductrice(s) qui sortent du tube d'amenée de poudre en aval de l'endroit (25) où ladite soudure est effectuée passent dans le tube de cuivre ainsi formé, la poudre est tassée dans le tube et autour de la ou des barre(s) conductrice(s) de manière dense et le tube rempli est ensuite déplacé à travers une ou des matrice(s) ou d'autres moyens destinés à réduire sa taille à la section transversale requise,
caractérisé en ce que le tube (1) d'amenée de poudre comporte sur une partie de la surface extérieure du tube qui est au voisinage du lieu de soudure (25) et qui sera radialement à l'intérieur des bords soudés en continu du ruban de cuivre replié dans le sens transversal et qui avance, un corps préformé (61) en matériau fritté ou en céramique perméable aux fluides, capable de supporter la température à laquelle il sera soumis pendant l'opération de soudure, et au moins une canalisation (65, 66) reliée au corps préformé, par laquelle l'argon ou l'autre gaz inerte peut être envoyé dans le matériau fritté ou la céramique perméable aux fluides du corps préformé (61) et est amené à s'écouler radialement à l'extérieur du corps préformé pour fournir l'atmosphère d'argon ou d'autre gaz inerte entre le corps préformé et les bords soudés en continu du ruban de cuivre replié dans le sens transversal au voisinage du lieu de soudure.

4. Appareil selon la revendication 3, dans lequel les surfaces latérales périphériques du corps préformé (61) en matériau fritté ou en céramique perméable aux fluides sont étanchéifiées pour les rendre sensiblement imperméables aux fluides.

5. Appareil selon la revendication 3 ou 4, dans lequel la majeure partie disposée sensiblement de manière centrale de la surface radialement intérieure du corps préformé est limitée par une partie (62) continue dans le sens périphérique de ladite surface radialement intérieure et est espacée radialement du tube (1) d'amenée de poudre pour former une chambre fermée (63) dans laquelle l'argon ou un autre gaz inerte provenant de ladite ou desdites canalisation(s) (65, 66) peut être envoyé et de laquelle l'argon ou l'autre gaz inerte peut s'écouler radialement vers l'extérieur à travers le matériau perméable aux fluides du corps préformé (61).

6. Appareil selon l'une quelconque des revendications 3 à 5, dans lequel le corps préformé (61) a une forme allongée et deux canalisations (65, 66), qui sont disposées radialement vers l'extérieur du tube (1) d'amenée de poudre et qui seront placées entre le tube (1) d'amenée de poudre et le ruban de cuivre (T) replié dans le sens transversal et qui avance, traversent les extrémités opposées du corps préformé (61) et s'ouvrent dans la chambre (63) qu'il contient.

7. Appareil selon l'une quelconque des revendications 3 à 6, dans lequel le corps préformé (61) a dans sa surface radialement extérieure une rainure (64) qui s'étend dans le sens de la longueur par rapport au tube (1) d'amenée de poudre et qui sera disposée radialement à l'intérieur des bords soudés en continu du ruban de cuivre replié dans le sens transversal qui avance.

8. Appareil selon la revendication 7, dans lequel la rainure (64) se trouvant dans la surface radialement extérieure du corps préformé est fermée en son extrémité amont.

9. Appareil selon l'une quelconque des revendications 3 à 8, dans lequel le corps préformé (61) a une surface radialement extérieure qui fait partie de la surface extérieure d'un cylindre imaginaire de section sensiblement circulaire.

10. Appareil selon l'une quelconque des revendications 3 à 9, dans lequel le corps préformé (61) est fait de nitrure de silicium lié par réaction.
